# EUROPÄISCHE PATENTSCHRIFT

(11) **EP 1 554 603 B1**
(45) Veröffentlichungstag und Bekanntmachung des Hinweises auf die Patenterteilung: **11.12.2013**
(21) Anmeldenummer: 03750681.3
(22) Anmeldetag: 02.10.2003
(51) Int. Cl.: G01S 13/93

(54) **VERFAHREN UND VORRICHTUNG ZUR ÜBERWACHUNG TOTER WINKEL EINES KRAFTFAHRZEUGS**
METHOD AND DEVICE FOR MONITORING DEAD ANGLES OF A MOTOR VEHICLE
PROCEDE ET DISPOSITIF POUR CONTROLER L'ANGLE MORT D'UNE AUTOMOBILE

(30) Priorität: 10.10.2002 DE 10247290
(43) Veröffentlichungstag der Anmeldung: 20.07.2005
(73) Patentinhaber: Volkswagen Aktiengesellschaft, 38440 Wolfsburg (DE)
(72) Erfinder: BARTELS, Arne, 38448 Wolfsburg (DE)
(74) Vertreter: Meyer, Enno
(86) Internationale Anmeldenummer: PCT/EP2003/010960
(87) Internationale Veröffentlichungsnummer: WO 2004/036244

(56) Entgegenhaltungen:
- EP-A- 1 026 522
- US-A- 5 325 096
- US-A- 5 339 075
- US-A- 5 530 447
- REED J C: "Side zone automotive radar" RADAR CONFERENCE, 1997., IEEE NATIONAL SYRACUSE, NY, USA 13-15 MAY 1997, NEW YORK, NY, USA,IEEE, US, 13. Mai 1997 (1997-05-13), Seiten 186-190, XP010224762 ISBN: 0-7803-3731-X

## Beschreibung

Die Erfindung betrifft ein Verfahren und eine Vorrichtung zur Überwachung toter Winkel eines Kraftfahrzeugs gemäß Anspruch 1 bzw. Anspruch 10.

Ein Fahrer eines Fahrzeugs kann den Bereich um sein Fahrzeug herum unmittelbar durch die Fahrzeugscheiben und mittelbar durch die Fahrzeugrückspiegel einsehen. Dabei kann der Fahrer durch die Fahrzeugscheiben im wesentlichen den Bereich vor dem Fahrzeug und die Bereiche seitlich vor dem Fahrzeug einsehen, während der Bereich hinter dem Fahrzeug durch den Fahrzeuginnenrückspiegel und die Bereiche seitlich hinter dem Fahrzeug durch einen oder mehrere Fahrzeugaußenrückspiegel einsehbar sind.

Aufgrund des eingeschränkten Blickfelds des Fahrers und der geometrischen Verhältnisse an einem Fahrzeug, d.h. beispielsweise aufgrund von sichtbehindernden Holmen zwischen den Fahrzeugfenstern, ist es dem Fahrer des Fahrzeugs im allgemeinen nicht möglich, alle Bereiche um ein Fahrzeug herum einzusehen, ohne sich umzudrehen oder den Kopf zudrehen. Unmittelbar hinter und vor dem Fahrzeug gibt es Bereiche, die der Fahrer nicht einsehen kann. Ebenso gibt es Bereiche an der Seite des Fahrzeugs, die der Fahrer ohne eine erhebliche Änderung des Blickfelds durch Drehung seines Kopfes nicht einsehen kann. Diese schlecht einsehbaren Bereiche an den Seiten des Fahrzeugs werden als Totwinkelbereiche des Fahrzeugs bezeichnet, wobei dieser Bereich je nach Größe und Sitzposition der Fahrers sowie nach Art und Einstellung der Außenspiegel variiert.

Aus der EP 1 026 522 A2 ist ein System zum Überwachen eines Bereichs an der Seite eines Fahrzeugs in einem dynamischen Verkehrsumfeld bekannt. Dabei weist das System eine IR-Sendeeinheit und eine IR-Empfangseinheit auf, die an der Seite des Fahrzeugs angeordnet sind. Durch diese IR-Sende- und Empfangseinheiten wird ein seitlicher, zu überwachender Bereich definiert, wobei eine Auswerteeinheit feststellt, ob sich ein Objekt in dem Überwachungsbereich befindet. Über eine geeignete Anzeigeeinheit wird dem Fahrer das Vorhandensein eines Objekts in dem überwachten Bereich mitgeteilt. Nachteilig bei dem bekannten System ist, daß der Fahrer auch auf Objekte hingewiesen wird, die für die Führung seines Fahrzeugs bedeutungslos sind.

Die US 5,339,075 offenbart eine ähnliche, mittels Ultraschall arbeitende, Vorrichtung, wobei eine Warnung nur ausgegeben wird, wenn die Relativgeschwindigkeit zwischen Objekt und Kraftfahrzeug eine vorbestimmte untere Grenze überschreitet.

Der Erfindung liegt daher die Aufgabe zugrunde, ein Verfahren und eine Vorrichtung zum Überwachen toter Winkel eines Kraftfahrzeugs zu schaffen, wobei der Fahrer nur dann eine Warnung erhält, wenn das im toten Winkel detektierte Objekt für die Fahrzeugführung von Bedeutung ist.

Die Aufgabe wird durch die Merkmale des Verfahrens nach Anspruch 1 und diejenigen der Vorrichtung nach Anspruch 10 gelöst. Bevorzugte Ausgestaltungen der Erfindung sind Gegenstand der Unteransprüche.

Das erfindungsgemäße Verfahren zur Überwachung des toten Winkels an der Seite eines Kraftfahrzeugs, das eine Warnfunktion zur Abgabe einer Warnung an den Fahrer aktiviert, wenn sich ein Objekt in einem vorgegebenen Warnbereich befindet, weist die folgenden Schritte auf:
a) Bestimmen der Relativgeschwindigkeit vᵣₑₗ zwischen Objekt und Kraftfahrzeug, Bestimmen der Fahrtrichtung des Objekts relativ zu dem Kraftfahrzeug und Bestimmen der Position des Objekts relativ zu dem Kraftfahrzeug innerhalb eines vorgegebenen Sensorbereichs,
b) Ausgeben einer Warnung an den Fahrer, wenn die Fahrtrichtung des Objekts derjenigen des Kraftfahrzeugs entspricht, die Relativgeschwindigkeit vᵣₑₗ zwischen Objekt und Kraftfahrzeug innerhalb eines vorbestimmten Bereichs, definiert durch eine untere Bereichsgrenze vᵤ und eine obere Bereichsgrenze vₒ liegt, wobei der vorbestimmte Bereich die Relativgeschwindigkeit Null enthält, und die Position des Objekts (F2) innerhalb des Warnbereichs liegt.

Die Relativgeschwindigkeit ist dabei auf das Kraftfahrzeug bezogen, mit anderen Worten, ist die Relativgeschwindigkeit größer Null, so bewegt sich das Objekt schneller als das Fahrzeug und ist die Relativgeschwindigkeit kleiner Null, so ist das Objekt langsamer als das Fahrzeug oder es handelt sich um Gegenverkehr. Objekte sind beispielsweise Fußgänger, Fahrzeuge, Fahrräder, Motorräder, Lastkraftwagen und Busse. Ferner ist die Fahrtrichtung des Objekts relativ zum Kraftfahrzeug definiert durch die Richtung der Fahrbahn, auf der sich das Objekt relativ zum Fahrzeug bewegt. Mit anderen Worten, bezüglich des Kraftfahrzeugs kann ein Objekt nur eine von zwei Fahrtrichtungen haben, entweder es bewegt sich in die gleiche Fahrtrichtung wie das Fahrzeug oder es bewegt sich in die entgegengesetzte Fahrtrichtung. Im letzteren Fall handelt es sich also um Gegenverkehr. Folglich hat ein Objekt, das bezüglich des Fahrzeugs die Relativgeschwindigkeit Null aufweist und von einer äußeren Fahrspur auf eine dem Fahrzeug benachbarte Fahrspur wechselt, die gleiche Fahrtrichtung wie das Fahrzeug, obwohl es sich bezogen auf die Relativgeschwindigkeit in senkrechter Richtung auf das Fahrzeug zu bewegt. Ferner ist der Sensorbereich durch den Bereich des Sensors vorgegeben, in welchem dieser Objekte nachweist und der Warnbereich ist der Bereich, innerhalb dem eine Warnung an den Fahrer abgegeben wird, d.h. der Totwinkelbereich. Der Warnbereich ist dabei ein Teil des Sensorbereichs.

Vorzugsweise wird auch bei Relativgeschwindigkeiten größer als die positive obere Bereichsgrenze vₒ ein Warnung generiert, d.h. in dieser bevorzugten Ausführungsform wird bei allen positiven Relativgeschwindigkeiten eine Warnung erzeugt, wenn die weiteren, oben genannten Bedingungen erfüllt sind.

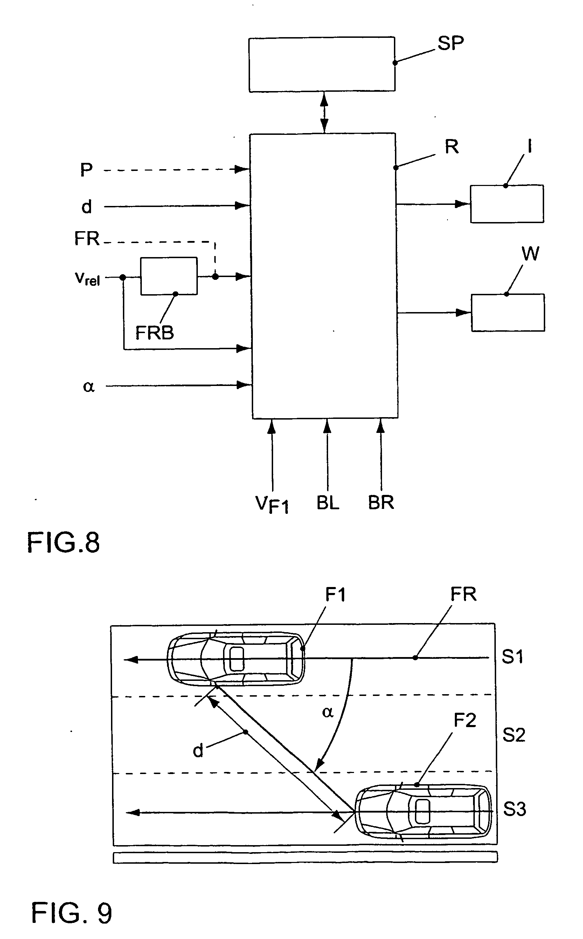

Insbesondere ist der vorbestimmte Bereich durch das Intervall der Relativgeschwindigkeiten von -30 km/h bis + 100 km/h, vorzugsweise -15 km/h bis + 50 km/h und insbesondere - 5 km/h bis + 30 km/h definiert ist. Dieses hat den Hintergrund, dass ein sich mit hoher Geschwindigkeit näherndes Objekt eine größere Strecke pro Zeiteinheit zurücklegt und somit in einem weiteren Abstand bereits überwacht werden muss. Die Erfindung gewährleistet somit, dass eine Fahr- bzw. Wamsituation nicht nur aufgrund der Tatsache beurteilt wird, ob sich ein Objekt in einem statischen oder nur von einer Geschwindigkeit oder einem Fahrparameter abhängigen Warnbereich oder Abstand befindet, sondern die einzelnen Eigenschaften des nähernden Objekt (z. B. Geschwindigkeit, Winkel [s. Fig. 8]) können je nach Situation in die Beurteilung mit einbezogen werden. Für die Warnfunktion ist daher für die Ausgabe einer Warnung der Abstand und die Relativgeschwindigkeit sowie gegebenenfalls zusätzlich auch die Winkelinformation (s. o.) für jedes erfasste Objekt relevant.

In einer weiteren bevorzugten Ausführungsform sind die Bereichsgrenzen eine Funktion der Geschwindigkeit des Kraftfahrzeugs, mit anderen Worten, bei einer geringen Geschwindigkeit des Fahrzeugs werden die Bereichsgrenzen herabgesetzt, während bei einer hohen Geschwindigkeit die Bereichsgrenzen zu höheren Relativgeschwindigkeiten verschoben werden.

Vorzugsweise ist die Warnfunktion unabhängig von der Richtung des Eintritts des Objekts in den toten Winkel und der Richtung des Austritts des Objekts aus dem toten Winkel. Ferner ist die Warnfunktion unabhängig ist vom Hintergrund des Objekts, das den toten Winkel betritt, und unabhängig von stehenden Objekten, deren Ausrichtung und deren Hintergrund.

In einer weiteren bevorzugten Ausführungsform sind Fahrsituationen klassifiziert, wobei jede klassifizierte Fahrsituation die Information enthält, ob die Warnfunktion aktiviert wird oder nicht, wenn ein Objekt in den Totwinkelbereich eintritt. Das Verfahren weist ferner die folgenden Schritte auf: Bestimmen der aktuellen Fahrsituation von Kraftfahrzeug und Objekt, Ermitteln derjenigen klassifizierten Fahrsituation, die der aktuellen Fahrsituation entspricht, und Aktivieren der Warnfunktion entsprechend der Information der ermittelten klassifizierten Fahrsituation.

Vorzugsweise berücksichtigt die Klassifikation zwei weitere Fahrspuren seitlich der Fahrspur des Kraftfahrzeugs. Diese Maßnahme ist im allgemeinen ausreichend.

Insbesondere wird die Bewertung, ob eine Warnfunktion beim Eintritt eines Objekts in einen toten Winkel bzw. Warnbereich des Kraftfahrzeugs ausgelöst wird, an beiden Seiten des Kraftfahrzeugs durchgeführt, mit anderen Worten, es werden beide Seiten des Kraftfahrzeugs überwacht, um Einscher- als auch Überholvorgänge oder allgemein Fahrspurwechsel mit der Überwachung abzudecken.

Dadurch, dass ein Winkel als Eingangsgröße für die Warnfunktion in der Fahrebene des Kraftfahrzeuges erfasst oder errechnet wird, welcher sich im wesentlichen durch die Fahrtrichtung des Kraftfahrzeugs (F1) und der zwischen einer Sensoreinrichtung zum Überwachen eines Warnbereichs und dem Objekt aufgespannten Gerade ergibt, lassen sich zusätzliche vorteilhafte Erkenntnisse zur Beurteilung der Fahrsituation gewinnen. Wird ein Objekt im Warnbereich erfasst (z. B. radialer Abstand unterschreitet Warnschwelle), so ist mit der zusätzlichen Information über den beschriebenen Winkel eine Aussage möglich, ob sich das Objekt auf einer benachbarten oder auf einer eventuell vorhandenen dritten Fahrspur befindet. Ist das Objekt auf einer dritten Fahrspur, ist keine Warnung notwendig, da ein gefahrloses Ausscheren auf die mittlere Fahrspur möglich ist.

Eine erfindungsgemäße Vorrichtung zur Durchführung des oben erläuterten Verfahrens umfaßt eine Sensoreinrichtung zum Überwachen eines toten Winkels, wobei die Sensoreinrichtung die Bewegungsrichtung eines Objekts relativ zum Kraftfahrzeug, die Relativgeschwindigkeit zwischen dem Objekt und dem Kraftfahrzeug sowie die Position des Objekts relativ zum Fahrzeug bestimmt, eine Steuereinheit zum Bewerten der ermittelten Daten, und eine Warneinrichtung zum Ausgeben eines Warnsignals an den Fahrer des Kraftfahrzeugs als Funktion der Bewertung der Daten. Die Position des detektieren Objekts relativ zum Fahrzeug wird vorzugsweise durch Messung des radialen Abstands zum Fahrzeug und Messung des Winkels, aus welchem sich das Objekt nähert, bestimmt.

Insbesondere umfaßt die Steuereinrichtung einen Speicher zum Speichern klassifizierter Fahrzustände und einen Vergleicher zum Vergleichen eines aus den Daten der Sensoreinrichtung durch die Steuereinheit ermittelten aktuellen Fahrzustand mit den klassifizierten Fahrzuständen.

Die Sensoreinrichtung kann in einem Seitenspiegel, einem Außenspiegel, dem Heck-Stoßfänger oder einer Rückleuchte des Kraftfahrzeugs angeordnet sein.

Eine bevorzugte Ausführungsform der Erfindung wird nachfolgend anhand der schematischen Zeichnungen erläutert. In den Zeichnungen zeigt
- Fig. 1: eine Definition des toten Winkels eines Kraftfahrzeugs,
- Fig. 2a - 2c: Wamsituationen bei ausgewählten Fahrsituationen,
- Fig. 3a - 3c: Situationen ohne Aktivierung der Wamfunktion,
- Fig. 4a- 4c: eine schematischen Darstellung des bevorzugten Geschwindigkeitsbereichs,
- Fig. 5a - 5d: mögliche Eintritts- und Austrittsrichtungen in einem toten Winkel für Fahrzeuge gleicher Fahrtrichtung und für Gegenverkehr,
- Fig. 6a -6c: Beispiele klassifizierter Fahrsituationen mit Auslösen eines Warnsignals,
- Fig. 7a - 7c: Beispiele klassifizierter Fahrsituationen ohne Auslösen eines Warnsignals,.
- Fig. 8: prinzipieller Aufbau einer Vorrichtung zur Überwachung toter Winkel und
- Fig. 9: mögliche Definition eines Winkels zwischen dem Kraftfahrzeug und einem Objekt

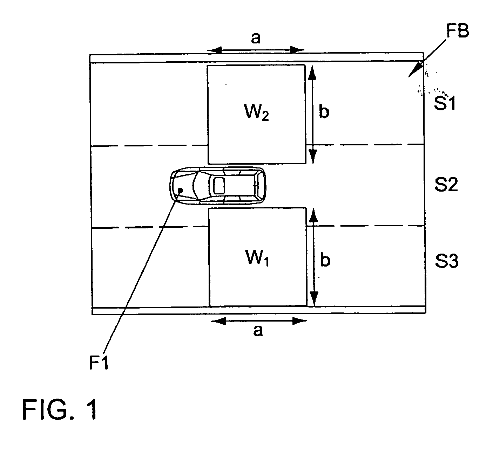

Fig. 1 zeigt eine schematische Darstellung der beiderseitigen sogenannten toten Winkel eines Kraftfahrzeugs. Dargestellt ist ein Kraftfahrzeug F1, das in der mittleren Spur S2 einer Fahrbahn FB mit drei Spuren S1, S2, S3 in der Zeichnung von rechts nach links fährt. Sowohl fahrer- als auch beifahrerseitig ist jeweils ein rechteckiger Bereich W1, W2 mit Kanten a, b, die beispielsweise ein Rechteck von ca. 5 x 5m definieren, dargestellt. Diese näherungsweisen Bereiche W1, W2 werden im folgenden als Totwinkelbereiche oder Wambereiche definiert, die vom Fahrer in den Außenspiegeln nicht eingesehen werden können. Die Bereiche hängen ab von der Größe und der Sitzposition des Fahrers sowie von der Art und Einstellung der Außenspiegel sowie von dem Aufbau des Fahrzeugs selbst. Ferner ist die Größe der Totwinkelbereiche von der Fahrsituation abhängig, beispielsweise von der Geschwindigkeit.

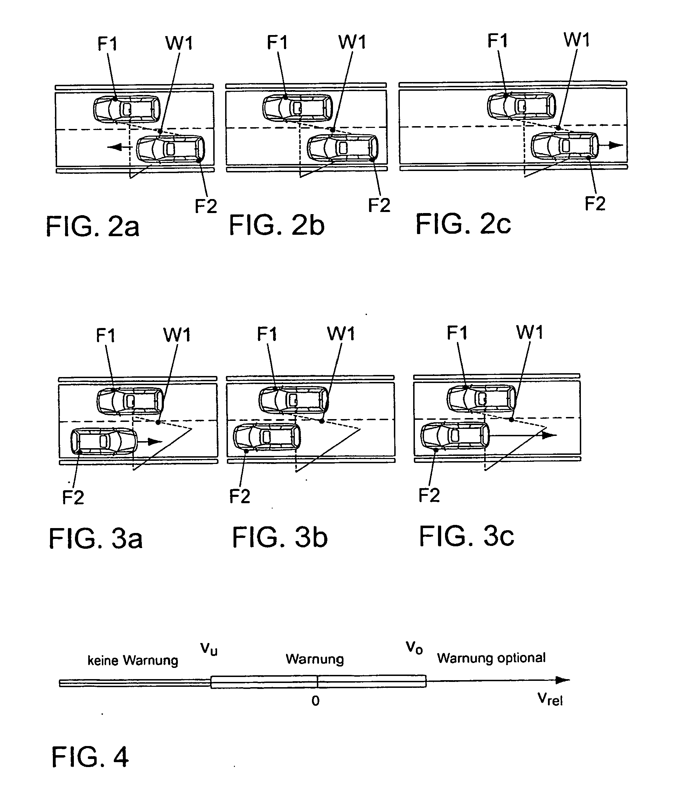

In den folgenden Figuren 2a-c, 3a-c, 5a-d, 6a-c, 7a-c und 8a-c wird dasjenige Fahrzeug, in dessen fahrerseitigen toten Winkel ein Objekt eintritt, als Fahrzeug F1 bezeichnet, und das Objekt wird durch ein weiteres Fahrzeug F2 spezifiziert, das als Objektfahrzeug bezeichnet wird. Die Bewegungsrichtung des Fahrzeugs F1, dessen toter Winkel betrachtet wird, ist in der Zeichnungsebene von rechts nach links.

Fig. 2a zeigt einen Überholvorgang, bei dem zwei Fahrzeuge F1 und F2 die gleiche Fahrtrichtung FR aufweisen und das Fahrzeug F1 von dem schnelleren Objektfahrzeug F2 langsam überholt wird. Durch das Eindringen des Objektfahrzeugs F2 in den fahrerseitigen Totwinkelbereich W1 des Fahrzeugs F1 wird eine Warnung ausgelöst.

Fig. 2b zeigt eine der Fig. 2a vergleichbare Situation, bei der sich das im Totwinkelbereich W1 des Fahrzeugs F1 befindende Objektfahrzeug F2 die gleiche Geschwindigkeit wie das Fahrzeug F1 hat. Es erfolgt eine Warnung an den Fahrer des Fahrzeugs F1.

Fig. 2c zeigt eine Situation, bei der das Objektfahrzeug F2 gegenüber dem Fahrzeug F1 langsam zurückfällt, was durch den nach hinten gerichteten Pfeil dargestellt wird, und durch den toten Winkel des Fahrzeugs F1 wandert. Es erfolgt eine Warnung an den Fahrer des Fahrzeuges F1. Die Fahrtrichtung FR beider Fahrzeuge F1, F2 ist auch hier identisch.

Weitere Situationen, wie die in den Figuren 3a bis 3c dargestellten, bei denen eine Warnfunktion durch das Eindringen eines Objekts in einen toten Winkel eines Fahrzeugs ausgelöst wird, lassen sich sowohl für die Fahrerseite als auch analog für die Beifahrerseite definieren.

Fig. 3a zeigt eine Situation, bei der das Objektfahrzeug F2 als Gegenverkehr in den fahrerseitigen toten Winkel W1 des Fahrzeugs F1 eintritt. Eine Warnung erfolgt bei Gegenverkehr prinzipiell nicht. Die Wahrnehmung eines Objekts als Gegenverkehr erfolgt beispielsweise durch die Detektierung einer negativen und vom Betrag her hohen Relativgeschwindigkeit vᵣₑₗ (Vᵣₑₗ ≤ vᵤ, s. Fig. 4).

Fig. 3b zeigt die Vorbeifahrt des Fahrzeugs F1 an dem stehenden Objektfahrzeug F2. Auch hier erfolgt keine Warnung bei einem Einritt eines stehenden Fahrzeugs in den Totwinkelbereich eines anderen Fahrzeugs. Die Wahrnehmung eines Objekts als stehendes Objekt erfolgt beispielsweise durch die detektierte Relativgeschwindigkeit Vᵣₑₗ, welche gleich der Eigengeschwindigkeit V_{F1} des Fahrzeuges F1 ist.

Fig. 3c schließlich zeigt eine Situation, bei der sich beide Fahrzeuge in die gleiche Fahrrichtung FR bewegen und das Objektfahrzeug F2 schnell bezüglich des sich in gleicher Richtung bewegenden Fahrzeug F1 zurückfällt, was durch den größeren, in der Zeichnung nach rechts zeigenden Richtungspfeil dargestellt ist. Mit anderen Worten, das Objektfahrzeug F2 durchläuft den Totwinkelbereich W1 des Fahrzeugs F1 von vorne nach hinten und die Situation kann als Überholvorgang des Fahrzeugs F1 beschrieben werden. Eine Warnung erfolgt in dieser Situation nicht. Die durch das Fahrzeug F1 detektierte Relativgeschwindigkeit vᵣₑₗ des Objektfahrzeugs F2 ist dabei negativ. (Vᵣₑₗ ≤ Vᵤ, Fig. 4). Sofern das Objektfahrzeug langsam zurückfällt (Vᵤ ≤ Vᵣₑₗ ≤ 0, Fig. 4) erfolgt jedoch eine Warnung.

Ferner erfolgt keine Warnung, wenn der Totwinkelbereich eines Fahrzeugs unabhängig vom Hintergrund leer ist (nicht dargestellt).

Fig. 4 zeigt in bildlicher Darstellung die Bereiche der Relativgeschwindigkeiten Vᵣₑₗ, bei denen beim Eintritt eines Objekts in den Totwinkelbereich eines Fahrzeugs eine Warnung erfolgt oder nicht. Die Relativgeschwindigkeit vᵣₑₗ ist dabei auf das Fahrzeug bezogen, um eine korrekte Vorzeichendefinition zu erreichen. Bei Relativgeschwindigkeiten kleiner als eine untere Grenze vᵤ zwischen dem Fahrzeug und einem Objekt wird keine Warnung ausgelöst, bei Relativgeschwindigkeiten vᵣₑₗ innerhalb des eines Bereichs zwischen der unteren Grenze vᵤ und einer oberen Grenze vₒ, wobei dieser Bereich die Relativgeschwindigkeit Null enthält, wird eine Warnung ausgelöst, und bei Relativgeschwindigkeiten größer als die obere Grenze vₒ ist das Auslösen einer Warnung optional. Die genannten Bereichsgrenzen können von der Eigengeschwindigkeit VF1 und von Fahrparametern (z. B. Beschleunigungsvorgang, Landstrassen-, Autobahnfahrt) des Fahrzeugs F1 abhängig sein.

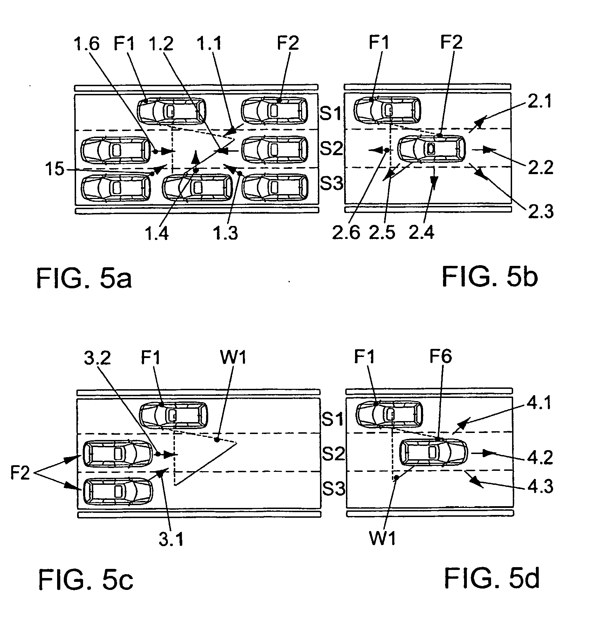

Die Figuren 5a-5d zeigen mögliche Eintritts- und Austrittsrichtungen in einen toten Winkel eines Fahrzeugs für Fahrzeuge gleicher Fahrtrichtung FR und für Gegenverkehr. Die bezüglich der möglichen Eintritts- und Austrittsrichtungen hier verwendeten Begriffe "rechts", "links", "vorne" und "hinten" beziehen sich auf die Bewegungsrichtung des Objektfahrzeugs F2.

Fig. 5a zeigt schematisch die 6 wesentlichen Eintrittsrichtungen, dargestellt durch Pfeile 1.1, 1.2, 1.3, 1.4, 1.5 und 1.6, in die das Fahrzeug F2 in den fahrerseitigen Totwinkelbereich W1 des Fahrzeugs F1 eintreten kann. Dargestellt sind ferner drei Fahrspuren S1, S2, S3 einer Fahrbahn FB. Die Pfeile haben die folgende Bedeutung:
1.1 Eintrittsrichtung schräg links nach vorne durch Wechsel Fahrzeug F2 von Fahrspur S1 nach Fahrspur S2 (Relativgeschwindigkeit größer Null),
1.2 Eintrittsrichtung nach vorne durch Verbleiben von Fahrzeug F2 auf der Fahrspur S2 (Relativgeschwindigkeit größer Null),
1.3 Eintrittsrichtung schräg rechts nach vorne durch Wechsel von Fahrzeug F2 von Fahrspur S3 nach Fahrspur S2 (Relativgeschwindigkeit größer Null),
1.4 Eintrittsrichtung nach rechts durch Wechsel von Fahrzeug F2 von Fahrspur S3 nach Fahrspur S2 (Relativgeschwindigkeit gleich Null),
1.5 Eintrittsrichtung schräg rechts nach hinten durch Wechsel von Fahrzeug F2 von Fahrspur S3 nach Fahrspur S2 (Relativgeschwindigkeit kleiner Null), und
1.6 Eintrittsrichtung nach hinten durch Verbleiben von Fahrzeug F2 auf der Fahrspur S2 (Relativgeschwindigkeit kleiner Null).

Fig. 5b zeigt schematisch die 6 wesentlichen Austrittsrichtungen, dargestellt durch Pfeile 2.1, 2.2, 2.3, 2.4, 2.5 und 2.6, in die das Fahrzeug F2 den fahrerseitigen Totwinkelbereich W1 des Fahrzeugs F1 verlassen kann. Die Pfeile haben die folgende Bedeutung:
2.1 Austrittsrichtung schräg rechts nach hinten durch Wechsel des Fahrzeugs F2 von Fahrspur S2 nach Fahrspur S1 (Relativgeschwindigkeit kleiner Null),
2.2 Austrittsrichtung nach hinten durch Verbleiben von Fahrzeug F2 auf der Fahrspur S2 (Relativgeschwindigkeit kleiner Null),
2.3 Austrittsrichtung schräg links nach hinten durch Wechsel von Fahrzeug F2 von Fahrspur S2 nach Fahrspur S3 (Relativgeschwindigkeit kleiner Null),
2.4 Austrittsrichtung nach links durch Wechsel von Fahrzeug F2 von Fahrspur S2 nach Fahrspur S3 (Relativgeschwindigkeit gleich Null),
2.5 Austrittsrichtung schräg links nach vorne durch Wechsel von Fahrzeug F2 von Fahrspur S3 nach Fahrspur S2 (Relativgeschwindigkeit größer Null), und
2.6 Austrittsrichtung nach vorne durch Verbleiben von Fahrzeug F2 auf der Fahrspur S2 (Relativgeschwindigkeit größer Null).

Fig. 5c zeigt schematisch die 2 wesentlichen Eintrittsrichtungen, dargestellt durch Pfeile 3.1, und 3.2, in die das Fahrzeug F2 als Gegenverkehr den fahrerseitigen Totwinkelbereich W1 des Fahrzeugs F1 betreten kann. Die Pfeile haben die folgende Bedeutung:
3.1 Eintrittsrichtung schräg links nach vorne durch Wechsel des in Gegenverkehrsrichtung fahrenden Fahrzeugs F2 von Fahrspur S3 nach Fahrspur F2, und
3.2 Eintrittsrichtung nach vorne durch Verbleiben des Fahrzeugs F2 auf der Fahrspur S2.

Fig. 5d zeigt schematisch die 3 wesentlichen Austrittsrichtungen, dargestellt durch Pfeile 4.1, 4.2 und 4.3, in die das Fahrzeug F2 den fahrerseitigen Totwinkelbereich W1 des Fahrzeugs F1 verlassen kann. Die Pfeile haben die folgende Bedeutung:
4.1 Austrittsrichtung schräg links nach vorne durch Wechsel des in Gegenverkehrsrichtung fahrenden Fahrzeugs F2 von Fahrspur S2 nach Fahrspur S1,
4.2 Austrittsrichtung nach vorne durch Verbleiben des in Gegenverkehrsrichtung fahrenden Fahrzeugs F2 auf Fahrspur S2, und
4.3 Austrittsrichtung schräg rechts nach vorne durch Wechsel des in Gegenverkehrsrichtung fahrenden Fahrzeugs F2 von Fahrspur S2 nach Fahrspur S3.

Die oben genannten möglichen Eintritts- und Austrittsrichtungen in einen toten Winkel eines Fahrzeugs für Fahrzeuge gleicher Fahrtrichtung und für Gegenverkehr 1.1-1.6, 2.1-2.6, 3.1-3.2 und 4.1- 4.3 werden zur Definition der Spalten einer Matrix benutzt, die klassifizierte Tote-Winkelsituationen der Fahrerseite beschreibt. Die Zeilen der Matrix werden definiert durch Hintergrundobjekte, beispielsweise "keine Objekte"; "bewegte Objekte", die untergliedert sind in "überholend", "gleich schnell", "zurückfallend" sowie "Gegenverkehr"; und "statische Objekte" wie beispielsweise "Pilonen", "Leitpfosten", "Bäume", "Stau", "Leitplanke" und "Tunnelwand". Für jede mögliche klassifizierte Tote-Winkelsituation der Matrix ist angegeben, ob bei Eintreten der Situation eine Warnung ausgegeben wird oder nicht.

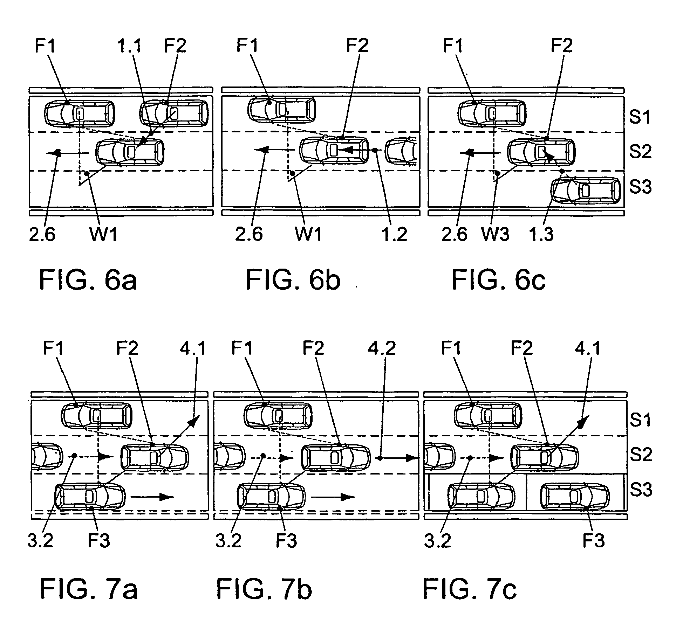

Die Figuren 6a -6c zeigen drei Beispiele aus einer Vielzahl möglicher klassifizierter Fahrsituationen mit Auslösen eines Warnsignal, die in parametrisierter Form Bestandteil der oben erläuterten Matrix sind.

Fig. 6a zeigt das sich auf Fahrspur S1 bewegende Fahrzeug F1 mit dem dahinter fahrenden Objektfahrzeug F2, das in Richtung 1.1 auf Spur S2 wechselt und dadurch in den Totwinkeibereich W1 des Fahrzeugs F1 gelangt. Da die Fahrtrichtungen der Fahrzeuge identisch sind, die Relativgeschwindigkeit größer Null ist (und sich innerhalb des vorbestimmten Bereichs vᵤ bis vₒ befindet) und die Position P des Objekts innerhalb des Warnbereichs liegt, wird eine Warnung ausgelöst. Das Objektfahrzeug verläßt den Totwinkelbereich des Fahrzeugs F1 wieder in Richtung 2.6.

Fig. 6b zeigt das sich auf Fahrspur S1 bewegende Fahrzeug F1. Auf der dazu parallelen Fahrspur S2 nähert sich von hinten in Richtung 1.2 das Objektfahrzeug F2 und tritt in den Totwinkelbereich W1 des Fahrzeugs F1 ein. Da die Fahrtrichtungen der Fahrzeuge identisch sind, die Relativgeschwindigkeit vᵣₑₗ größer Null ist (und sich innerhalb des vorbestimmten Bereichs vᵤ bis vₒ befindet) und die Position des Objekts sich im Warnbereich befindet, wird eine Warnung ausgelöst. Das Objektfahrzeug verläßt den Totwinkelbereich des Fahrzeugs F1 wieder in Richtung 2.6.

Fig. 6c zeigt das sich auf Fahrspur S1 bewegende Fahrzeug F1. Durch einen Wechsel des Objektfahrzeugs F2 in Richtung, 1.3 auf Spur S3 gelangt dieses in den Totwinkelbereich W1 des Fahrzeugs F1. Da die Fahrtrichtungen FR der Fahrzeuge identisch sind, die Relativgeschwindigkeit größer Null ist (und sich innerhalb des vorbestimmten Bereichs vᵤ bis vₒ befindet) und das Objekt sich im Warnbereich befindet, wird eine Warnung ausgelöst. Das Objektfahrzeug verläßt den Totwinkelbereich des Fahrzeugs F1 wieder in Richtung 2.6.

Die Figuren 7a - 7c zeigen drei Beispiele aus einer Vielzahl möglicher klassifizierter Fahrsituationen ohne Auslösen eines Warnsignals.

Fig. 7a zeigt das Fahrzeug F1 mit Totwinkelbereich W1, das sich auf der Fahrspur S1 in vorgegebener Fahrtrichtung bewegt (d.h. in der Zeichenebene von rechts nach links). Auf der Fahrspur S2 bewegt sich in entgegengesetzter Fahrtrichtung FR das Objektfahrzeug F2 in Richtung 3.2 und tritt in den Totwinkelbereich W1 des Fahrzeugs F1 ein. Es wird keine Warnung ausgelöst. Das Objektfahrzeug verläßt des Totwinkelbereich wieder in Richtung 4.1, d.h. unter Spurwechsel nach Spur S1. Auf der Fahrspur S3 bewegt sich ein weiteres Fahrzeug F3 in entgegengesetzter Fahrtrichtung FR zu Fahrzeug F1. Für die Auslösung einer Warnung ist dieses Fahrzeug unbeachtlich, da es in den Totwinkelbereich W1 nicht eintritt.

Fig. 7b zeigt das Fahrzeug F1 mit Totwinkelbereich W1, das sich auf der Fahrspur S1 in vorgegebener Fahrtrichtung FR bewegt (d.h. in der Zeichenebene von rechts nach links). Auf der Fahrspur S2 bewegt sich in entgegengesetzter Fahrtrichtung das Objektfahrzeug F2 in Richtung 3.2 und tritt in den Totwinkelbereich W1 des Fahrzeugs F1 ein. Es wird keine Warnung ausgelöst. Das Objektfahrzeug verläßt des Totwinkelbereich wieder in Richtung 4.2, d.h. es verbleibt auf der Spur S2. Auf der Fahrspur S3 bewegt sich ein weiteres Fahrzeug F3 in entgegengesetzter Fahrtrichtung FR zu Fahrzeug F1. Für die Auslösung einer Warnung ist dieses Fahrzeug unbeachtlich, da es in den Totwinkelbereich W1 nicht eintritt.

Fig. 7c schließlich zeigt das Fahrzeug F1 mit Totwinkelbereich W1, das sich auf der Fahrspur S1 in vorgegebener Fahrtrichtung FR bewegt (d.h. in der Zeichenebene von rechts nach links). Auf der Fahrspur S2 bewegt sich in entgegengesetzter Fahrtrichtung FR das Objektfahrzeug F2 in Richtung 3.2 und tritt in den Totwinkelbereich W1 des Fahrzeugs F1 ein. Es wird keine Warnung ausgelöst. Das Objektfahrzeug verläßt des Totwinkelbereich wieder in Richtung 4.1, d.h. es wechselt zur Fahrspur S1. Auf der Fahrspur S3 ist ein Stau mit Fahrzeugen F3 oder befinden sich parkende Fahrzeuge. Für die Auslösung einer Warnung sind diese Fahrzeuge F3 unbeachtlich, da sie stehen und folglich als Hintergrund behandelt werden.

In Figur 8 ist ein prinzipieller Aufbau einer Vorrichtung zur Überwachung toter Winkel dargestellt. Eine Recheneinrichtung R erhält unterschiedliche Informationen über mindestens ein Objekt F2 und/oder über die eigene Fahrsituation. Die Information über ein Objekt F2 kann dabei von einem nicht dargestellten Sensor bereitgestellt werden. Es ist auch denkbar, dass Information über die Position P von ortsfesten Objekten von einer Speichereinrichtung (z. B. Navigationsgerät) bereitgestellt wird. Die Bereitstellung von Daten einer Position P für die Recheneinrichtung R ist in Fig. 8 als gestrichelter Pfeil dargestellt. Auch die Ermittlung bzw. Mitteilung einer Fahrtrichtung FR kann von einer Fahrtrichtungsermittlungseinrichtung (z. B. Navigationsgerät) bereitgestellt werden. Der optionale Inforrnationszweig P ist in Fig. 8 gestrichelt eingezeichnet.

Die Fahrtrichtungsbestimmung FRB ermittelt die Fahrtrichtung FR aus der Relativgeschwindigkeit vᵣₑₗ zu einem erfassten Objekt. Dabei kann auch der zeitliche Verlauf einer Relativgeschwindigkeit herangezogen werden. So wird die Fahrtrichtung FR eines auf einer Fahrspur S2, S3 überholenden Objekts F2, (Vᵣₑₗ > 0), welches nach dem Überholvorgang wieder zurückfällt (Vᵣₑₗ < 0) als insgesamt gleiche Fahrtrichtung bewertet.

Die Relativgeschwindigkeit Vᵣₑₗ, der Abstand d und der Winkel α zwischen dem Kraftfahrzeug F1 und dem Objekt F2 (s. Definition in Fig. 9) werden der Recheneinrichtung R zur Verfügung gestellt. Als weitere Information sind der Recheneinrichtung R die Eigengeschwindigkeit V_{F1} sowie Signale über eine Betätigung des linken oder rechten Bunkers BL, BR verfügbar. Zusätzliche Information über die Fahrsituation, wie beispielsweise Beschleunigungswert, Lenkwinkel des Kraftfahrzeugs F1 können Teil der an die Recheneinrichtung R bereitgestellten Informationen sein. Eine Warnfunktion warnt den Fahrer in einer Informationsstufe I oder in einer Warnstufe W1 nach folgendem Schema:

Wird ein Fahrzeug im Warnbereich erfasst, wird dies dem Fahrzeugführer signalisiert. Eine intensive oder dringliche Warnung erfolgt, sobald der Fahrzeugführer in dieser Situation einen Fahrspurwechsel mit der Betätigung eines Blinkers anzeigt. Die Signalisierung des Fahrzeugführers kann dabei optisch und/oder akustisch und/oder haptisch erfolgen.

Sofern weitere Bereiche neben dem Kraftfahrzeug F1 durch einen weiteren Sensor überwacht werden, sind entsprechend zusätzliche Eingänge an der Recheneinrichtung R vorgesehen.

Fig. 9 zeigt eine mögliche Definition eines Winkels α, welcher als Eingangsgröße für die Warnfunktion erfasst wird, zwischen dem Kraftfahrzeug F1 und einem Objekt F2. Der Winkel wird hierbei in der Fahrebene durch die Fahrtrichtung und der Geraden definiert, welche sich zwischen einer in Fig. 9 nicht dargestellten Sensoreinrichtung und dem zu überwachenden Objekt F2 ergibt. Wie die Gerade und letztendlich der Winkel α dabei genau definiert ist (Endpunkt am Objekt F2 mittig am Fahrzeuganfang oder im Objektschwerpunkt oder an einem Objektpunkt mit geringstem Abstand usw.), ist unerheblich, wenn der entsprechende Sachverhalt in der Recheneinrichtung R oder im Sensor oder sonstigen Steuergeräten Berücksichtigung für eine sichere und zuverlässige Warnfunktion findet.

### BEZUGSZEICHENLISTE

- F1: Fahrzeug
- F2: Fahrzeug
- F3: Fahrzeug
- FB: Fahrbahn
- W1: toter Winkel fahrerseitig
- W2: toter Winkel beifahrerseitig
- S1: Fahrspur
- S2: Fahrspur
- S3: Fahrspur
- FR: Fahrtrichtung
- P: Position
- FRB: Fahrtrichtungsbestimmung
- I: Informationsstufe
- W: Wamstufe
- SP: Speicher
- BL: Blinkersignal links
- BR: Blinkersignal rechts
- R: Recheneinrichtung
- α: Winkel
- V_{F1}: Eigengeschwindigkeit
- d: Abstand
- a: Kantenlänge
- b: Kantenlänge
- 1.1 -1.6: Eintrittsrichtungen
- 2.1 - 2.6: Austrittsrichtungen
- 3.1 - 3.2: Eintrittsrichtungen
- 4.1 - 4.3: Austrittsrichtungen
- vᵣₑₗ: Relativgeschwindigkeit
- vₒ: obere Grenze
- vᵤ: untere Grenze

## Patentansprüche

1. Verfahren zur Überwachung des toten Winkels (W1, W2) an der Seite eines Kraftfahrzeugs (F1), wobei eine Warnfunktion an den Fahrer eine Warnung abgibt, wenn sich ein Objekt (F2) in einem Warnbereich (W1, W2) befindet, aufweisend die folgenden Schritte:
a) Bestimmen der Relativgeschwindigkeit (vᵣₑₗ) zwischen Objekt (F2) und Kraftfahrzeug (F1), Bestimmen der Fahrtrichtung (FR) des Objekts (F2) relativ zu dem Kraftfahrzeug (F1) und Bestimmen der Position (P) des Objekts relativ zu dem Kraftfahrzeug (F1),
b) Ausgeben einer Warnung an den Fahrer, wenn
die Fahrtrichtung (FR) des Objekts (F2) derjenigen des Kraftfahrzeugs (F1) entspricht, die Relativgeschwindigkeit (vᵣₑₗ) zwischen Objekt (F2) und Kraftfahrzeug (F1) innerhalb eines vorbestimmten Bereichs, definiert durch eine untere Bereichsgrenze (vᵤ) und eine obere Bereichsgrenze (vₒ) liegt, wobei der vorbestimmte Bereich die Relativgeschwindigkeit Null enthält, und
die Position (P) des Objekts (F2) innerhalb des Warnbereichs (W1, W2) liegt,
wobei die Bereichsgrenzen (vᵤ, vₒ) eine Funktion der Eigengeschwindigkeit (V_{F1}) des Kraftfahrzeugs (F1) sind.

2. Verfahren nach Anspruch 1, **dadurch gekennzeichnet, daß** die Warnfunktion unabhängig von der Richtung des Eintritts des Objekts (F2) in den toten Winkel (W1, W2) und der Richtung des Austritts des Objekts (F2) aus dem toten Winkel (W1, W2) ist.

3. Verfahren nach einem der vorangegangenen Ansprüche, **dadurch gekennzeichnet, daß** die Warnfunktion unabhängig ist vom Hintergrund des Objekts (F2), das in den Warnbereich (W1, W2) eintritt, und unabhängig ist von stehenden Objekten (F3), deren Ausrichtung und deren Hintergrund.

4. Verfahren nach einem der vorangegangenen Ansprüche, **dadurch gekennzeichnet, daß** Fahrsituationen klassifiziert sind, wobei jede klassifizierte Fahrsituation die Information aufweist, ob die Warnfunktion aktiviert wird oder nicht, wenn ein Objekt (F2) in den Warnbereich (W1, W2) eintritt, und das Verfahren die weiteren Schritte aufweist Bestimmen der aktuellen Fahrsituation von Kraftfahrzeug (F1) und Objekt (F2), Ermitteln derjenigen klassifizierten Fahrsituation, die der aktuellen Fahrsituation entspricht,
Aktivieren der Warnfunktion entsprechend der ermittelten klassifizierten Fahrsituation.

5. Verfahren nach Anspruch 4, **dadurch gekennzeichnet, daß** die Klassifikation zwei weitere Fahrspuren (S2, S3) seitlich der Fahrspur (S1) des Kraftfahrzeugs (F1) berücksichtigt.

6. Verfahren nach einem der vorangegangenen Ansprüche, **dadurch gekennzeichnet, daß** die Bewertung, ob eine Warnfunktion beim Eintritt eines Objekts in den Warnbereich (W1, W2) des Kraftfahrzeugs (F1) ausgelöst wird, an beiden Seiten des Kraftfahrzeugs (F1) durchgeführt wird.

7. Verfahren nach einem der vorangegangenen Ansprüche, **dadurch gekennzeichnet, dass** ein Winkel (α) als Eingangsgröße für die Warnfunktion in der Fahrebene des Kraftfahrzeuges (F1) erfasst oder errechnet wird, welcher sich im wesentlichen durch die Fahrtrichtung (FR) des Kraftfahrzeugs (F1) und der zwischen einer Sensoranordnung zum Überwachen eines Warnbereichs (W1, W2) und dem überwachten Objekt (F2) aufgespannten Gerade (G) ergibt.

8. Vorrichtung zur Durchführung des Verfahrens nach einem der vorangegangenen Ansprüche, aufweisend eine Sensoreinrichtung zum Überwachen eines Warnbereichs (W1, W2), wobei die Sensoreinrichtung einen Sensorbereich definiert, der den Warnbereich umfaßt, und die Sensoreinrichtung die Fahrtrichtung eines Objekts (F2) relativ zu einem Kraftfahrzeug (F1), die Relativgeschwindigkeit (vᵣₑₗ) zwischen dem Objekt (F2) und dem Kraftfahrzeug (F1), und die Position den Objekts (F2) relativ zum Kraftfahrzeug (F1) bestimmt,
eine Steuereinheit zum Bewerten der ermittelten Daten, und
eine Warneinrichtung zum Ausgeben eines Warnsignals an den Fahrer des Kraftfahrzeugs (F1) als Funktion der Bewertung der Daten.

9. Vorrichtung nach Anspruch 8, **dadurch gekennzeichnet, daß** die Steuereinrichtung einen Speicher (SP) zum Speichern klassifizierter Fahrzustände und einen Vergleicher zum Vergleichen eines aus den Daten der Sensoreinrichtung durch die Steuereinheit ermittelten aktuellen Fahrzustand mit den klassifizierten Fahrzuständen aufweist.

10. Vorrichtung nach Anspruch 8 oder 9, **dadurch gekennzeichnet, daß** die Sensoreinrichtung in einem Seitenspiegel, dem hinteren Stoßfänger, einem Außenspiegel oder einer Rückleuchte des Kraftfahrzeugs angeordnet ist.

## Claims

1. Method for monitoring the blind spot (W1, W2) on the side of a motor vehicle (F1), wherein a warning function outputs a warning to the driver if an object (F2) is located in a warning area (W1, W2), comprising the following steps:
a) determining the relative velocity (vᵣₑₗ) between the object (F2) and the motor vehicle (F1), determining the direction of travel (FR) of the object (F2) relative to the motor vehicle (F1), and determining the position (P) of the object relative to the motor vehicle (F1),
b) outputting a warning to the driver if the direction of travel (FR) of the object (F2) corresponds to that of the motor vehicle (F1), the relative velocity (vᵣₑₗ) between the object (F2) and the motor vehicle (F1) is within a predetermined range, defined by a lower range limit (Vᵤ) and an upper range limit (Vₒ), wherein the predetermined range contains the relative speed zero, and
the position (P) of the object (F2) is within the warning area (W1, W2),
wherein the range limits (Vᵤ, Vₒ) are a function of the intrinsic velocity (V_{F1}) of the motor vehicle (F1).

2. Method according to Claim 1, **characterized in that** the warning function is independent of the direction in which the object (F2) enters the blind spot (W1, W2) and the direction in which the object (F2) exits the blind spot (W1, W2).

3. Method according to one of the preceding claims, **characterized in that** the warning function is independent of the background of the object (F2) which enters the warning area (W1, W2), and is independent of stationary objects (F3), and the orientation and background thereof.

4. Method according to one of the preceding claims, **characterized in that** driving situations are classified, wherein each classified driving situation comprises the information as to whether the warning function is to be activated or not if an object (F2) enters the warning area (W1, W2), and the method comprises the following steps:
determining the current driving situation of the motor vehicle (F1) and object (F2),
identifying that classified driving situation which corresponds to the current driving situation, and
activating the warning function in accordance with the identified classified driving situation.

5. Method according to Claim 4, **characterized in that** the classification takes into account two further lanes (S2, S3) to the side of the lane (S1) of the motor vehicle (F1).

6. Method according to one of the preceding claims, **characterized in that** the evaluation as to whether a warning function is triggered when an object enters the warning area (W1, W2) of the motor vehicle (F1) is carried out on both sides of the motor vehicle (F1).

7. Method according to one of the preceding claims, **characterized in that** an angle (α) is detected or calculated as an input value for the warning function in the driving plane of the motor vehicle (F1), which angle (α) is obtained essentially by means of the direction of travel (FR) of the motor vehicle (F1) and the straight line (G) drawn between a sensor arrangement for monitoring a warning area (W1, W2) and the monitored object (F2).

8. Device for carrying out the method according to one of the preceding claims, having a sensor device for monitoring a warning area (W1, W2), wherein the sensor device defines a sensor range which includes the warning area, and the sensor device determines the direction of travel of an object (F2) relative to a motor vehicle (F1), the relative velocity (vᵣₑₗ) between the object (F2) and the motor vehicle (F1), and the position of the object (F2) relative to the motor vehicle (F1),
a control unit for evaluating the identified data and
a warning device for outputting a warning signal to the driver of the motor vehicle (F1) as a function of the evaluation of the data.

9. Device according to Claim 8, **characterized in that** the control device comprises a memory (SP) for storing classified driving states, and a comparator for comparing a current driving state, identified by the control unit on the basis of the data of the sensor device, with the classified driving states.

10. Device according to Claim 8 or 9, **characterized in that** the sensor device is arranged in a side mirror, the rear bumper, an exterior mirror or a reversing light of the motor vehicle.

## Revendications

1. Procédé de surveillance de l'angle mort (W1, W2) sur le côté d'un véhicule automobile (F1), une fonction d'avertissement étant envoyée au conducteur lorsqu'un objet (F2) se trouve dans une zone d'avertissement (W1, W2), présentant les étapes suivantes :
a) détermination de la vitesse relative (vᵣₑₗ) entre l'objet (F2) et le véhicule automobile (F1), détermination de la direction de conduite (FR) de l'objet (F2) par rapport au véhicule automobile (F1) et détermination de la position (P) de l'objet par rapport au véhicule automobile (F1) ;
b) envoi d'un avertissement au conducteur lorsque :
la direction de conduite (FR) de l'objet (F2) correspond à celle du véhicule automobile (F1), la vitesse relative (vᵣₑₗ) entre l'objet (F2) et le véhicule automobile (F1) se situe à l'intérieur d'une zone prédéfinie par une limite de zone inférieure (vᵤ) et une limite de zone supérieure (vₒ), la zone prédéfinie contenant la vitesse relative égale à zéro ; et
la position (P) de l'objet (F2) se situe à l'intérieur de la zone d'avertissement (W1, W2) ;
les limites de zone (vᵤ, vₒ) étant fonction de la vitesse propre (V_{F1}) du véhicule automobile (F1).

2. Procédé selon la revendication 1, **caractérisé en ce que** la fonction d'avertissement ne dépend pas de la direction de l'entrée de l'objet (F2) dans l'angle mort (W1, W2) et de la direction de la sortie de l'objet (F2) hors de l'angle mort (W1, W2).

3. Procédé selon l'une quelconque des revendications précédentes, **caractérisé en ce que** la fonction d'avertissement ne dépend pas de l'arrière-plan de l'objet (F2) entrant dans la zone d'avertissement (WI, W2) et ne dépend pas des objets (F3) fixes, de leur orientation et de leur arrière-plan.

4. Procédé selon l'une quelconque des revendications précédentes, **caractérisé en ce que** les situations de conduite sont classées, chaque situation de conduite classée comportant l'information indiquant si la fonction d'avertissement est activée ou non lorsqu'un objet (F2) entre dans la zone d'avertissement (W1, W2) et le procédé présentant les étapes supplémentaires suivantes :
détermination de la situation de conduite actuelle du véhicule automobile (F1) et de l'objet (F2) ;
détermination de la situation de conduite classée correspondant à la situation de conduite actuelle ;
activation de la fonction d'avertissement en fonction de la situation de conduite classée déterminée.

5. Procédé selon la revendication 4, **caractérisé en ce que** le classement de deux voies de circulation (S2, S3) supplémentaires est pris en compte à côté de la voie de circulation (S1) du véhicule automobile (F1).

6. Procédé selon l'une quelconque des revendications précédentes, **caractérisé en ce que** l'évaluation de si une fonction d'avertissement est déclenchée lors de l'entrée d'un objet dans la zone d'avertissement (W1, W2) du véhicule automobile (F1) est réalisée des deux côtés du véhicule automobile (F1).

7. Procédé selon l'une quelconque des revendications précédentes, **caractérisé en ce qu'**un angle (α) est détecté ou calculé pour servir de grandeur d'entrée pour la fonction d'avertissement dans le plan de conduite du véhicule automobile (F1), ledit angle découlant pour l'essentiel de la direction de conduite (FR) du véhicule automobile (F1) et de la droite (G) reliant un agencement de capteur servant à surveiller une zone d'avertissement (W1, W2) et l'objet (F2) surveillé.

8. Dispositif de mise en oeuvre du procédé selon l'une quelconque des revendications précédentes, comportant un dispositif de capteur servant à surveiller une zone d'avertissement (W1, W2), le dispositif de capteur définissant une zone de capteur comprenant la zone d'avertissement et le dispositif de capteur définissant la direction de conduite d'un objet (F2) par rapport à un véhicule automobile (F1), la vitesse relative (vᵣₑₗ) entre l'objet (F2) et le véhicule automobile (F1) et la position de l'objet (F2) par rapport au véhicule automobile (F1) ;
une unité de commande servant à analyser les données déterminées ; et
un dispositif d'avertissement permettant d'envoyer un signal d'avertissement au conducteur du véhicule automobile (F1) en fonction du résultat de l'évaluation des données.

9. Dispositif selon la revendication 8, **caractérisé en ce que** le dispositif de commande comprend une mémoire (SP) permettant de mémoriser les états de conduite classés et un comparateur permettant de comparer un état de conduite actuel déterminé par l'unité de commande à partir des données du dispositif de capteur aux états de conduite classés.

10. Dispositif selon la revendication 8 ou 9, **caractérisé en ce que** le dispositif de capteur est agencé dans un rétroviseur latéral, dans le pare-chocs arrière, un rétroviseur extérieur ou un feu arrière du véhicule automobile.
